# FASCICULE DE BREVET EUROPEEN

(11) **EP 0 416 980 B1**
(45) Date de publication et mention de la délivrance du brevet: **19.05.1993**
(21) Numéro de dépôt: 90402389.2
(22) Date de dépôt: 29.08.1990
(51) Int. Cl.: E04F 13/08, F16B 37/06

(54) **Ferrure réglable permettant la fixation de plaques extérieures de revêtement de façade**
Beschlag für einstellbare Befestigung von Aussenbekleidungspaneelen
Adjustable fitting for the securing of exterior cladding panels

(30) Priorité: 08.09.1989 FR 8911785
(43) Date de publication de la demande: 13.03.1991
(73) Titulaire: Lebraut, Richard, F-78400 Chatou (FR)
(72) Inventeur: Lebraut, Richard, F-78400 Chatou (FR)
(74) Mandataire: Madeuf, Claude Alexandre Jean

(56) Documents cités:
- EP-A- 0 175 636
- EP-A- 0 212 228
- FR-A- 2 557 227
- FR-A- 2 610 969
- GB-A- 29 550
- GB-A- 339 051
- GB-A- 542 764
- US-A- 3 842 486

## Description

Actuellement, beaucoup de bâtiments de services tels que bureaux, centres d'études, etc. sont réalisés très rapidement à partir d'une ossature en béton et les façades du bâtiment sont revêtues de plaques extérieures de recouvrement qui sont en matières diverses telles que des alliages ferreux, de la matière plastique, des plaques en pierre naturelle ou régénérée, des plaques d'aluminium anodé, etc.

Pour fixer ces plaques de revêtement, on utilise des ferrures qui sont fixées sur la face extérieure du mur et un élément de réglage en longueur permet d'obtenir une parfaite verticalité du revêtement de façade de façon que les plaques de revêtement soient dans un même plan pour donner au bâtiment terminé une qualité parfaite sur lequel la lumière peut jouer sans qu'aucune malfaçon soit visible.

Cependant, les dispositifs connus jusqu'à présent ne permettent pas un réglage aisé des éléments de support de plaques de revêtement car la fixité de cet élément de réglage est difficilement obtenue puisqu'il faut compter avec les mouvements du sol et les différentes trépidations qu'engendre le trafic des véhicules terrestres et souterrains.

La présente invention remédie à cet inconvénient en créant une ferrure réglable simple à blocage parfait pour permettre la fixation dans un plan vertical des plaques extérieures de revêtement de façade.

De plus, ces ferrures permettent la mise en place si cela est nécessaire d'une couche d'isolant telle que laine de verre, fibres synthétiques ou autres assurant ainsi une protection thermique et sonore supplémentaire du bâtiment du fait qu'entre le mur de bâtiment et les plaques de recouvrement se trouvent, d'une part, une lame d'air et, d'autre part, une couche d'isolant.

Une ferrure réglable permettant la fixation de plaques extérieures de revêtement de façade est connue du document FR-A-2 610 969, et ce document a été utilisé pour énoncer la revendication principale dont le préambule mentionne ainsi les caractéristiques techniques faisant partie de l'état de la technique et dont la partie caractérisante indique les caractéristiques techniques pour lesquelles la protection est recherchée.

Une autre caractéristique de l'invention est énoncée à la revendication 2.

Diverses autres caractéristiques de l'invention ressortent d'ailleurs de la description qui suit.

Une forme de réalisation de l'objet de l'invention est représentée, à titre d'exemple non limitatif, aux dessins annexés.

La fig. 1 est une coupe-élévation partielle d'un mur d'un bâtiment portant une ferrure réglable permettant la fixation de plaques de recouvrement.

La fig. 2 est une coupe verticale de la ferrure à plus grande échelle.

La fig. 3 est une vue de détail de la fig. 2.

La fig. 4 montre en plan un des éléments de la ferrure réglable.

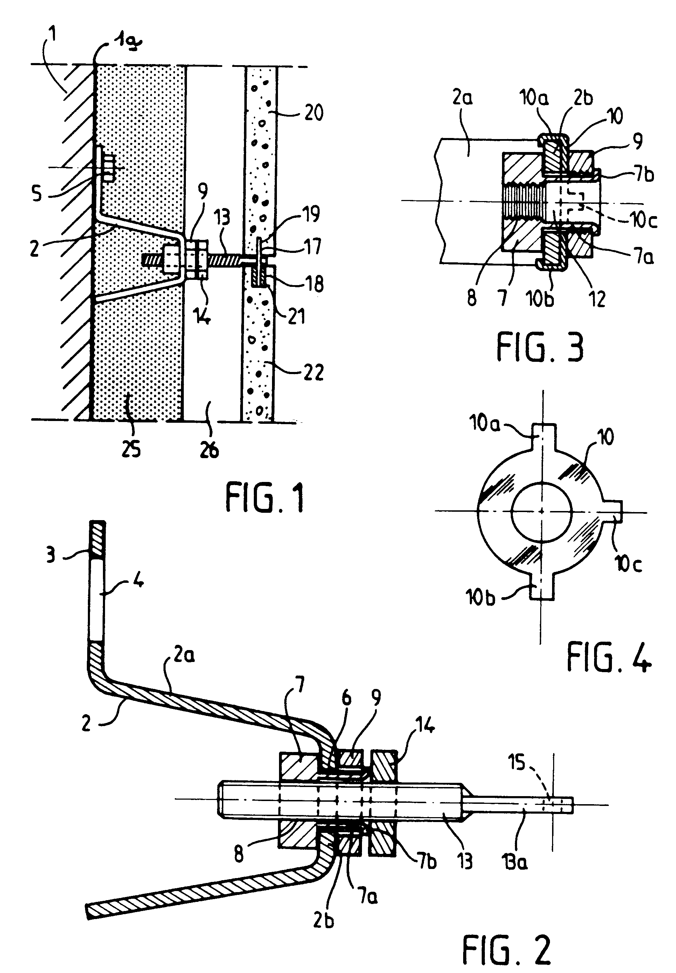

A la fig. 1, on a représenté un mur 1 vertical par exemple en béton mais dont la face la n'est pas plane puisque le béton a été coulé sans être lissé.

Sur la face avant la du mur sont fixées des ferrures de maintien, par des moyens classiques, à des emplacements déterminés à l'avance, marquant par exemple horizontalement des lignes parallèles équidistantes et verticalement d'autres lignes équidistantes afin qu'à chaque emplacement de croisement des lignes horizontales et verticales soit fixée une ferrure réglable. Celle-ci se compose d'un profilé 2 sensiblement en U dont la branche supérieure 2a est prolongée verticalement par une patte 3 percée d'une fenêtre 4 à travers laquelle pénètre l'organe de maintien 5 de la ferrure. La zone médiane verticale 2b de l'U du profilé 2 est percée d'une ouverture 6 dans laquelle est engagée une pièce de maintien 7 taraudée en 8 et qui présente, à sa partie avant, une zone amincie 7a retenant, par un collier 7b, un écrou prisonnier 9.

De plus, il est prévu également une rondelle 10 dont les pattes 10a, 10b assurent, lorsque l'écrou est vissé correctement, le freinage de cet écrou 9. Les pattes 10a, 10b repliées sur la partie 2b du profilé 2 assurent le maintien de la rondelle 10 en place tandis que la patte 10c bloque l'écrou 9 par pénétration d'une manière connue en soi.

Dans le canal central 12 de la pièce de maintien 7 se terminant par la partie taraudée 8 est vissée une tige filetée 13 portant un deuxième écrou 14. Cette tige filetée 13 présente à son extrémité avant une partie en méplat 13a dans laquelle est percé un trou 15. Ainsi, après avoir vissé correctement la tige filetée 13 dans le taraudage 8, la partie terminale 13a aplatie de la tige 13 occupe une position qui permet de mettre le trou 15 dans le plan vertical ou autre recherché.

Lorsque ces trous 15 sont tous parfaitement dans un même plan vertical ou autre, il est possible d'y engager une tige verticale 17 (voir fig. 1) qui porte à sa partie inférieure un manchon plastique 18 afin de faire pénétrer la partie supérieure de la tige 17 dans un trou 19 d'une plaque de recouvrement 20 (plaque supérieure) et dans le trou 21 de la plaque inférieure 22 en y incluant le manchon plastique 18.

Lorsque la plaque 22 est en place, on pose la plaque 20 au dessus et on règle à ce moment la verticalité parfaite de ces deux plaques 22, 20 l'une sur l'autre en vissant ou dévissant suivant les besoins l'écrou 9 sur la tige filetée 13 qu'il n'est pas nécessaire de faire tourner.

A ce moment, l'écrou 14 est serré sur la partie terminale du prolongement 7b de la pièce 7 à l'aide de la même clé qui sert à serrer l'écrou 9. On obtient ainsi une fixation parfaite des tiges filetées 13 qui sont parfaitement bloquées et qui ne peuvent en aucun cas se déplacer sous l'effet des trépidations. On peut ainsi réaliser des recouvrements de façades ou murs-rideaux parfaitement plans donc ne laissant apparaître aucune malfaçon quels que soient, d'une part, la matière constituant les plaques de recouvrement et, d'autre part, l'angle d'ancrage de ces plaques.

Il est signalé qu'à la fig. 1, 25 désigne une couche d'isolant thermique et sonore et 26 une lame d'air complétant l'isolation. De plus, les pièces constituant la ferrure réglable sont réalisées en matière résistant aux agents considérés.

## Revendications

1. Ferrure réglable permettant la fixation de plaques extérieures de revêtement de façade dans laquelle on fixe, de distance en distance sur un mur (1), un profilé (2) dont la partie inférieure affecte sensiblement la forme d'un U et dont la branche supérieure (2a) est prolongée verticalement par une patte (3) percée d'une fenêtre (4) destinée à la mise en place d'un organe approprié de maintien (5) à l'endroit choisi sur le mur (1), la zone centrale verticale (2b) de la ferrure en U est percée d'une ouverture (6) à travers laquelle passe une pièce de maintien (7) présentant à sa partie avant une zone amincie destinée à maintenir un écrou prisonnier (9) afin de bloquer la pièce de maintien (7) sur le profilé (2) et d'en assurer l'entraînement, une tige (13) se terminant par un méplat (13a) percé d'un canal vertical (15) destiné à recevoir une tige (17) maintenant par pénétration une plaque inférieure (22) et une plaque supérieure (20) de revêtement, la tige à méplat (13) permettant, par déplacement, de régler la position de la plaque supérieure (20) sur la plaque inférieure (22), caractérisée en ce que la pièce de maintien (7) est taraudée intérieurement, la tige à méplat (13) étant filetée pour son vissage dans la pièce de maintien (7), le déplacement de la tige à méplat (13) étant obtenu en vissant ou dévissant l'écrou (9), puis cette tige à méplat (13) étant bloquée sur la pièce de maintien (7) par un contre-écrou (14).

2. Ferrure suivant la revendication 1, caractérisée en ce qu'une rondelle frein (10) maintient l'écrou prisonnier (9) serré par recouvrement partiel au moyen de pattes (10a, 10b) rabattues sur la partie centrale (2b) du profilé (2) et par une troisième patte (10c) pénétrant dans l'écrou prisonnier (9).

## Patentansprüche

1. Einstellbarer Beschlag für die Befestigung von Außenbekleidungspaneelen für Fassaden, in der auf einer Mauer (1) in Abständen ein Profileisen (2) befestigt ist, dessen unten liegender Teil im wesentlichen die Form eines "U" aufweist und dessen oben liegender Arm (2a) vertikal durch eine Tatze (3) verlängert ist, die eine fensterartige Öffnung (4) für die Befestigung eines geeigneten Befestigungselementes (5) an gewünschter Stelle auf der Mauer (1) aufweist, während in den vertikalen Zentralbereich (2b) des U-förmigen Beschlages eine Öffnung (6) eingebracht ist, die ein Haltestück (7) aufnimmt, das auf seinem vorderen Teil einen Bereich geringeren Durchmessers für eine Anpressmutter (9) aufweist, mit der das Haltestück (7) auf dem Profileisen (2) arretiert und ein Bolzen (13) mitgenommen werden kann, der in einem Flachteil (13a) mit einer Vertikalöffnung (15) endet, die für die Aufnahme eines Stiftes (17) für das Festhalten eines Unterpaneeles (22) und Oberpaneeles (20) in Öffnungen derselben bestimmt ist, wobei der mit dem Flachteil (13a) versehene Bolzen (13) es durch Verschiebung erlaubt, die Lage des Oberpaneeles (20) im Verhältnis zum Unterpaneel (22) einzustellen, dadurch **gekennzeichnet**, daß das Haltestück (7) ein Innengewinde (8) aufweist und der Bolzen (13) für das Einschrauben in das Haltestück (7) mit einem Außengewinde versehen ist, so daß die Verschiebung des Bolzens (13) durch Lösen und Anziehen der Mutter (9) erreicht wird und danach der Bolzen (13) im Haltestück (7) durch eine Kontermutter (14) gesichert wird.

2. Beschlag nach dem Anspruch 1, dadurch **gekennzeichnet**, daß die Anpreßmutter (9) durch eine Sicherungsscheibe (10) angepresst gehalten ist, deren Lappen (10a,10b) auf den Zentralbereich (2b) des Profileisens (2) umgebogen sind, und deren dritter Lappen (10c) in die Anpreßmutter (9) eingreift.

## Claims

1. Adjustable fitting member enabling the fixation of facade lining exterior panel boards in which there is fixed, from distance to distance on a wall (1), a section member (2) the lower portion of which is substantially in the shape of a U and the upper branch (2a) is vertically extended by a lug (3) pierced with a window (4) adapted for positioning an appropriate retaining member (5) in a position chosen on the wall (1), the vertical central zone (2b) of the U-shaped fitting member is pierced with an opening (6) through which passes a retaining member (7) having at its front portion a thinned-out zone adapted for retaining captive a nut (9) so as to lock the retaining member (7) on the section member (2) and ensure the entrainment thereof, a rod (13) terminating into a flattened portion (13a) pierced with vertical channel (15) adapted for receiving a rod (17) maintaining by penetration a lower lining panel board (22) and an upper lining panel board (20), the flattened portion rod (13) enabling, by displacement, to adjust the position of the upper lining panel board (20) on the lower lining panel board (22), characterized in that the retaining member (7) is innerly screwed, the flattened portion rod (13) being threaded for its screwing into the retaining member (7), the displacement of the flattened portion rod (13) being obtained by screwing or unscrewing the nut (9), then this flattened portion rod (13) being locked on the retaining member (7) by means of a counter-nut (14).

2. Fitting member according to claim 1, characterized in that a brake washer (10) keeps captive the nut (9) clamped by partial overlapping by means of lugs (10a, 10b) folded over the central portion (2b) of the section member (2) and by a third lug (10c) penetrating into the captive nut (9).
